# EUROPÄISCHE PATENTANMELDUNG

(11) **EP 4 516 705 A1**
(43) Veröffentlichungstag der Anmeldung: **05.03.2025**
(21) Anmeldenummer: 24198040.8
(22) Anmeldetag: 03.09.2024
(51) Int. Cl.: B65G 47/84, B65B 43/50, B67C 7/00

(54) **VORRICHTUNG ZUM FÜHREN VON BEHÄLTERN, TRANSPORTSYSTEM UND BEHÄLTERBEHANDLUNGSMASCHINE UMFASSEND DIE VORRICHTUNG**

(30) Priorität: 04.09.2023 DE 102023123674
(71) Anmelder: KHS GmbH, 44143 Dortmund (DE)
(72) Erfinder: Fahldieck, Andreas, 44143 Dortmund (DE); Leyendecker, Jan, 44143 Dortmund (DE); Singur, Igor, 44143 Dortmund (DE)

(57) **Zusammenfassung**

Die Erfindung betrifft eine Vorrichtung (10) zum Führen von Behältern (40), umfassend mindestens ein um eine Drehachse (12) drehbar gelagertes Führungsrad (14), das eine Vielzahl von Behälterbodenaufnahmen (18) aufweist, mindestens eine feststehend um das Führungsrad (14) gelagerte Außenführung (16) für die Behälter (40), mindestens eine Trägereinrichtung (20) und mindestens eine Verstelleinheit (22) für die Trägereinrichtung (20), wobei die Trägereinrichtung (20) mindestens ein um die Drehachse (12) drehbar gelagertes Trägerelement (24), an dem das Führungsrad (14) drehfest befestigt ist, und mindestens ein feststehend gelagertes Trägerelement (26), an dem die Außenführung (16) befestigt ist, aufweist, wobei die Verstelleinheit (22) zur Höhenverstellung der Trägereinrichtung (20) ausgebildet ist. Mit der Erfindung wird eine Vorrichtung (10) zum Führen von Behältern in einer Behälterbehandlungsanlage bereitgestellt, die einen einfachen Aufbau aufweist und mit geringem Aufwand zu betreiben und zu warten ist.

## Beschreibung

Die Erfindung betrifft eine Vorrichtung zum Führen von Behältern, ein Transportsystem und eine Behälterbehandlungsmaschine umfassend die Vorrichtung.

Zum Transport von Behältern werden Transportvorrichtungen verwendet, bei denen die Behälter aufrecht transportiert werden können, insbesondere nach dem Befüllen und vor oder während des Verschließens der Behälter. Die Transportvorrichtungen weisen dazu mindestens einen Transportstern mit einer Vielzahl von Behälteraufnahmen auf, in denen die Behälter gehalten werden. Feststehende Führungen führen die von dem Transportstern bewegten und gehaltenen Behälter.

Bei Behälterbehandlungsmaschinen hängt der Abstand zwischen den Behälteraufnahmen des Transportsterns und den Behandlungselementen, insbesondere Füll- bzw. Verschließelementen, von der Höhe der verwendeten Behälter ab. Bei Produktwechseln bzw. Formatwechseln, bei denen die Art der Behälter gewechselt wird, kann die Höhe der neu zu verarbeitenden bzw. zu behandelnden Behälter verschieden zu den vorher verarbeiteten bzw. behandelten Behältern sein. Daher ist eine Höhenanpassung der drehenden Transportsterne und dazugehöriger feststehender Führungen notwendig, um sie an die Höhe der neu zu verarbeitenden bzw. zu behandelnden Behälter anzupassen.

Aus EP 2 684 805 A1 ist eine Vorrichtung zum Führen von Behältern in einer Abfüllanlage bekannt. Die Vorrichtung umfasst einen um eine Drehachse drehbaren Führungsstern mit mindestens einer sich konisch in Richtung der Drehachse verjüngenden Behälteraufnahmetasche zur Aufnahme eines Behälters. Um den Führungsstern erstreckt sich eine feststehende bzw. nicht rotierende Außenführung, die koaxial zu dem Führungsstern angeordnet ist. Der Führungsstern und die Außenführung sind zur Anpassung an unterschiedliche Behälterformate in Richtung der Drehachse höhenverstellbar und weisen dazu jeweils eine eigene Höhenverstellung bestehend aus mehreren Stellzylindern auf.

Aufgabe der Erfindung ist es, eine Vorrichtung zum Führen von Behältern in einer Behälterbehandlungsanlage bereitzustellen, die einen einfachen Aufbau aufweist und mit geringem Aufwand zu betreiben und zu warten ist.

Diese Aufgabe wird durch die Merkmale der unabhängigen Ansprüche gelöst. Vorteilhafte Weiterbildungen sind Gegenstand der abhängigen Ansprüche sowie der folgenden Beschreibung.

Bei einer Vorrichtung zum Führen von Behältern, umfassend mindestens ein um eine Drehachse drehbar gelagertes Führungsrad, das eine Vielzahl von Behälterbodenaufnahmen aufweist, mindestens eine feststehend um das Führungsrad gelagerte Außenführung für die Behälter, mindestens eine Trägereinrichtung und mindestens eine Verstelleinheit für die Trägereinrichtung, ist gemäß der Erfindung vorgesehen, dass die Trägereinrichtung mindestens ein um die Drehachse drehbar gelagertes Trägerelement, an dem das Führungsrad drehfest befestigt ist, und mindestens ein feststehend gelagertes Trägerelement, an dem die Außenführung befestigt ist, aufweist, wobei die Verstelleinheit zur Höhenverstellung der Trägereinrichtung ausgebildet ist.

Unter dem Begriff feststehend wird ein in Bezug zur Vorrichtung nicht rotierendes Element verstanden, das jedoch zumindest linear, z. B. in seiner Höhe, verstellt werden kann.

Die Verstelleinheit kann beispielsweise die gesamte Trägereinrichtung, d. h. gleichzeitig das drehbar gelagerte Trägerelement und das feststehend gelagerte Trägerelement, und/oder jedes der Trägerelemente einzeln verstellen. Im erstgenannten Fall kann die Verstelleinheit z.B. einen einzelnen Antrieb zur gemeinsamen Höhenverstellung beider Trägerelemente umfassen. Im zweitgenannten Fall kann die Verstelleinheit z.B. für jedes der beiden Trägerelemente jeweils einen eigenen Antrieb zur Höhenverstellung aufweisen.

Die Vorrichtung zum Führen von Behältern weist dabei mindestens ein drehbar gelagertes Führungsrad auf, das um eine Drehachse drehbar ist. In dem Führungsrad können die Böden von Behältern in Behälterbodenaufnahmen geführt werden. Die Behälterbodenaufnahmen dienen zur bodenseitigen Abstützung der Behälter und können kegelstumpfförmig ausgebildet sein, um unterschiedliche Behälterdurchmesser aufnehmen zu können. Die Behälterbodenaufnahmen können, vorzugsweise äquidistant, über einen Umfang des Führungsrads verteilt angeordnet sein.

Um das Führungsrad ist mindestens eine Außenführung gelagert, die feststehend ist. Die feststehende Lagerung der Außenführung bezieht sich dabei auf die Vorrichtung an sich. Das Führungsrad kann sich damit unabhängig von der Außenführung drehen.

Die Trägereinrichtung weist sowohl das drehbar gelagerte Trägerelement als auch das feststehend gelagerte Trägerelement auf. Das Führungsrad wird durch das drehbar gelagerte Trägerelement getragen und die Außenführung durch das feststehend gelagerte Trägerelement. Damit trägt die Trägereinrichtung sowohl das Führungsrad als auch die Außenführung. Auch hier ist die feststehende Lagerung des feststehend gelagerten Trägerelements in Bezug zu der Vorrichtung zu verstehen.

Eine Höhenverstellung des feststehend gelagerten Trägerelements bewirkt eine Höhenverstellung der Außenführung. Eine Höhenverstellung des drehbar gelagerten Trägerelements bewirkt eine Höhenverstellung des Führungsrads.

Bei einer vorteilhaften Ausführungsvariante der Erfindung kann bereits mit einem einzigen Antrieb der Verstelleinheit eine Höhenverstellung der gesamten Trägereinrichtung, d. h. sowohl des drehbar gelagerten Trägerelements als auch des feststehend gelagerten Trägerelements und damit auch des Führungsrads und der Außenführung, durchgeführt werden, sodass keine Synchronisation mehrerer Antriebe durchgeführt werden muss. Die Vorrichtung weist in diesem Fall einen besonders einfachen Aufbau auf. Insbesondere bei hygienischen Anwendungen, wie z. B. bei aseptischen Füllmaschinen, kann in diesem Fall eine Reinigung der Vorrichtung bessere Reinigungsergebnisse liefern und die Sicherheit gegen mikrobiologische Kontamination erhöhen.

Ferner ist es möglich, dass die Verstelleinheit dazu ausgebildet ist, das drehbar gelagerte Trägerelement und das feststehend gelagerte Trägerelement unabhängig voneinander zu verstellen. In diesem Fall kann die Höhenverstellung durch separate, vorzugsweise miteinander synchronisierte, Antriebe der Verstelleinheit erfolgen.

Die Behälter können Flaschen sein, insbesondere Getränkeflaschen, vorzugsweise aus Polyethylenterephthalat (PET).

Es ist denkbar, dass das drehbar gelagerte Trägerelement beispielsweise in und/oder an dem feststehend gelagerten Trägerelement drehbar gelagert sein kann, vorzugsweise an einem nach oben weisenden Ende des feststehend gelagerten Trägerelements.

Weiter kann gemäß einem Ausführungsbeispiel das drehbar gelagerte Trägerelement an einer Oberseite des Führungsrads befestigt sein und das feststehend gelagerte Trägerelement kann an einer Unterseite der Außenführung befestigt sein.

Die Drehachse kann im Zusammenhang mit der Drehbewegung des Führungsrads und des drehbar gelagerten Trägerelements als gedachte Drehachse verstanden werden. Die physische Drehachse des Führungsrads kann das drehbar gelagerte Trägerelement sein, das keine Verbindung zu einer Drehachse einer ggf. vorhandenen weiteren rotierenden Einheit zum Beispiel einer rotierenden Haltevorrichtung für Haltekragen der Behälter aufweisen muss.

Die Verstelleinheit kann weiter beispielsweise als Linearantrieb ausgebildet sein, der vorzugsweise als elektrischer, magnetischer, hydraulischer oder pneumatischer Motor ausgebildet sein kann. Weiter kann die Verstelleinheit einen umlaufenden Riemen aufweisen, an dem die Trägereinrichtung befestigt sein kann. Alternativ oder zusätzlich kann die Verstelleinheit eine Gewindespindel aufweisen, an der ein Gegenelement höhenverstellbar ist, an dem die Trägereinrichtung befestigt sein kann. Gemäß einem alternativen oder zusätzlichen Ausführungsbeispiel kann die Verstelleinheit eine Hebebühne aufweisen.

In einem weiteren Ausführungsbeispiel kann die Verstelleinheit zum Verstellen der Höhe von beiden Trägerelementen gleichzeitig ausgebildet sein. D. h., dass die Verstelleinheit in diesem Ausführungsbeispiel gleichzeitig das feststehend gelagerte Trägerelement und das drehbar gelagerte Trägerelement in seiner Höhe verstellen kann. Durch die gleichzeitige Verstellung des feststehend gelagerten Trägerelements und des drehbar gelagerten Trägerelements können daher auch die Außenführung und das Führungsrad gleichzeitig verstellt werden. Damit kann eine synchrone Höhenverstellung sowohl der Außenführung als auch des Führungsrads bereitgestellt werden.

Gemäß einem weiteren Ausführungsbeispiel können das feststehend gelagerte Trägerelement und das drehbar gelagerte Trägerelement koaxial oder im Wesentlichen koaxial zur Drehachse angeordnet sein.

Der Begriff "im Wesentlichen" meint in diesem Zusammenhang, dass die koaxiale Anordnung im Rahmen der normalen Fehlertoleranz als koaxial zu verstehen ist. Damit können die Trägerelemente platzsparend an der Vorrichtung angeordnet werden. Eine Anordnung der Trägerelemente entlang eines Umfangs des Führungsrads oder entlang einer Erstreckungsrichtung um die Drehachse entlang der Außenführung kann damit vermieden werden. Weiter kann durch die koaxiale Anordnung der Trägerelemente auch eine weitere Verbesserung bei einer Reinigung der Vorrichtung bewirkt werden.

Weiter kann die Vorrichtung beispielsweise mindestens eine erste Antriebseinheit für das drehbar gelagerte Trägerelement aufweisen, die zum Drehen des drehbar gelagerten Trägerelements um die Drehachse ausgebildet ist.

Die erste Antriebseinheit kann zum Beispiel ein elektrischer, hydraulischer, pneumatischer oder magnetischer Drehmotor sein. Die Drehzahl der ersten Antriebseinheit kann durch eine Steuerung vorgegeben werden, u. a. zum Synchronisieren mit anderen Antrieben. Weiter kann die erste Antriebseinheit beispielsweise als Direktantrieb für das drehbar gelagerte Trägerelement wirken bzw. ausgebildet sein oder über ein Getriebe mit dem drehbar gelagerten Trägerelement zum Antreiben dieses Trägerelements verbunden sein.

Gemäß einem weiteren Ausführungsbeispiel kann die erste Antriebseinheit an der Trägereinrichtung befestigt sein, vorzugsweise unterhalb des drehbar gelagerten Trägerelements. Damit kann oberhalb des drehbar gelagerten Trägerelements Platz eingespart werden, sodass ein Freiweg oberhalb des Führungsrads maximiert werden kann. Dies kann eine maximale Verstellung des Führungsrads bereitstellen. Weiter kann durch den Freiweg auch eine weitere Verbesserung der Reinigungswirkung bei hygienischen Anforderungen erzielt werden.

Ferner kann die Verstelleinheit dazu eingerichtet sein, gemeinsam mit dem drehbar gelagerten Trägerelement auch die erste Antriebseinheit in der Höhe zu verstellen.

Gemäß einem Ausführungsbeispiel kann die Verstelleinheit unterhalb des Führungsrads angeordnet sein, wobei sich das drehbar gelagerte Trägerelement von der Verstelleinheit zu dem Führungsrad erstreckt und/oder sich das feststehend gelagerte Trägerelement von der Verstelleinheit zu der Außenführung erstreckt.

Die Trägerelemente können sich von unten zu dem Führungsrad bzw. der Außenführung erstrecken. Weiter können sie sich zumindest teilweise durch das Führungsrad bzw. die Außenführung erstrecken. Durch die Erstreckung der Trägerelemente von unten zu dem Führungsrad bzw. der Außenführung kann oberhalb des Führungsrads bzw. der Außenführung Platz eingespart werden. Weiter kann durch die zumindest teilweise Erstreckung der Trägerelemente durch das Führungsrad bzw. die Außenführung weiter Platz eingespart werden, wodurch die Reinigungsleistung weiter verbessert werden kann.

Gemäß einem Ausführungsbeispiel kann das feststehend gelagerte Trägerelement eine sich entlang der Drehachse erstreckende Durchgangsöffnung für das drehbar gelagerte Trägerelement aufweisen.

In einem alternativen Ausführungsbeispiel kann das drehbar gelagerte Trägerelement als Hohlwelle ausgebildet sein, durch die sich das feststehend gelagerte Trägerelement erstreckt.

In beiden oben genannten Alternativen kann eine Platzeinsparung erfolgen und eine kompakte Trägereinrichtung bereitgestellt werden. Dies erhöht die Reinigungsleistung weiter.

In einem weiteren Aspekt betrifft die Erfindung ein Transportsystem für Behälter, umfassend eine Haltevorrichtung für Behälter und mindestens eine Vorrichtung nach der vorangegangenen Beschreibung, wobei die Haltevorrichtung ein um die Drehachse der Vorrichtung drehbar gelagertes Transportrad mit einer Vielzahl von Halteelementen zum Halten von Behältern an einem Haltekragen der Behälter aufweist und die Vorrichtung unterhalb des Transportrads angeordnet ist.

In diesem Zusammenhang kann unter der Drehachse eine gedachte Drehachse verstanden werden. Die physische Drehachse der Vorrichtung kann dann eine gedachte Verlängerung aufweisen, um die sich das Transportrad der Haltevorrichtung drehen kann. Zwischen dem Transportrad und der Vorrichtung kann dann weiter ein Freiraum angeordnet sein. D. h., dass keine physische Verbindung entlang der gedachten Drehachse zwischen der Vorrichtung und der Haltungsvorrichtung bestehen muss. Damit kann die Reinigungswirkung weiter verbessert werden.

Die Halteelemente können gemäß einem Ausführungsbeispiel, vorzugsweise äquidistant, über einen Umfang des Transportrads verteilt angeordnet sein. Vorzugsweise weisen die Halteelemente am Transportrad die gleiche Teilung wie die Behälterbodenaufnahmen an dem Führungsrad auf. Unter der Teilung ist dabei der Abstand in Umfangsrichtung zu verstehen. In dem bevorzugten Ausführungsbeispiel haben die Halteelemente in Umfangsrichtung den gleichen Abstand zueinander wie die Behälterbodenaufnahmen. Jeweils ein Halteelement kann dabei beispielsweise parallel zur Drehachse über je einer Behälterbodenaufnahme angeordnet sein.

Gemäß einem Ausführungsbeispiel kann das Transportsystem weiter ein Gehäuse aufweisen, das sich zumindest um das Transportrad, das Führungsrad und die Au-ßenführung erstreckt, wobei das Gehäuse eine Durchgangsöffnung aufweist, durch die sich das feststehend gelagerte Trägerelement und das drehbar gelagerte Trägerelement in das Gehäuse hinein erstrecken.

Mit dem Gehäuse kann damit beispielsweise ein Volumen gegen die Umgebung abgegrenzt werden, wobei das Gehäuse das Transportsystem in einen zu reinigenden Teil und einen nicht zu reinigenden Teil unterteilen kann. Der zu reinigende Teil kann das Volumen innerhalb des Gehäuses sein. Das Gehäuse kann weiter beispielsweise eine Eingangsöffnung und eine Ausgangsöffnung für den Behältertransport aufweisen.

Gemäß einem weiteren Ausführungsbeispiel kann ein Dichtelement die Durchgangsöffnung des Gehäuses abdichten, vorzugsweise ein Faltenbalg, der sich um das drehbar gelagerte Trägerelement und/oder das feststehend gelagerte Trägerelement erstrecken kann und sowohl an dem Gehäuse als auch an dem drehbar gelagerten Trägerelement und/oder dem feststehend gelagerten Trägerelement befestigt sein kann.

Das Dichtelement kann zum Beispiel auch ein Rollbalg sein oder einen Gleitzylinder aufweisen.

Weiter ist denkbar, dass die Haltevorrichtung beispielsweise oberhalb und/oder seitlich außerhalb der Drehachse, vorzugsweise mit einer eigenen Lagerung, gelagert sein kann.

Dazu kann die Haltevorrichtung in einem Bereich unmittelbar unterhalb der Haltevorrichtung keine Lagerung aufweisen. Die Haltevorrichtung kann über dem Führungsrad und der Außenführung hängend gelagert sein. Das Führungsrad und das Transportrad sind in bevorzugter Ausführungsform nicht mechanisch miteinander gekoppelt, insbesondere nicht durch eine Welle miteinander verbunden. Die Haltevorrichtung kann beispielsweise an einer Decke über der Vorrichtung gelagert sein oder ein Lager aufweisen, das sich radial von der Drehachse gesehen außerhalb der Vorrichtung auf dem Boden abstützen kann.

Weiter kann das Transportsystem beispielsweise ferner eine zweite Antriebseinheit zum Drehen des Transportrads aufweisen, die vorzugsweise zusätzlich zum Antreiben eines drehbar gelagerten Rads mit einer Vielzahl von Behälterbehandlungseinheiten ausgebildet sein kann.

Die erste Antriebseinheit und zweite Antriebseinheit können über eine Steuerung miteinander synchronisiert sein, so dass sie die gleiche Drehfrequenz bereitstellen können.

Alternativ kann zum Beispiel ein, vorzugsweise teleskopierbares, Mitnehmerelement vorgesehen werden, das eine Drehung des Transportrads synchron auf das Führungsrad oder umgekehrt überträgt.

Das Mitnehmerelement kann dann beispielsweise an dem Transportrad oder dem Führungsrad befestigt sein und in einem ausgezogenen Teleskopzustand an das jeweils andere Rad ankoppeln, um eine Drehbewegung zu übertragen.

Weitere Vorteile und Wirkungen sowie Weiterbildungen des Transportsystems ergeben sich aus den Vorteilen und Wirkungen sowie Weiterbildungen der oben beschriebenen Vorrichtung. Zur Vermeidung von Wiederholungen wird daher in dieser Hinsicht auf die vorangegangene Beschreibung verwiesen.

Weiter betrifft die Erfindung eine Behälterbehandlungsmaschine umfassend mindestens eine Vorrichtung nach der vorangegangenen Beschreibung und/oder mindestens ein Transportsystem nach der vorangegangenen Beschreibung, wobei die Behälterbehandlungsmaschine eine Vielzahl von Behälterbehandlungseinheiten aufweist, die oberhalb des Führungsrads angeordnet sind und zum Behandeln von Behältern ausgebildet ist, die von dem Führungsrad geführt werden.

Je eine Behälterbehandlungseinheit kann über je einer Behälterbodenaufnahme angeordnet sein. Weiter kann je eine Behälterbehandlungseinheit auch über je einem Halteelement des Transportsystems angeordnet sein, sofern das Transportsystem vorhanden ist.

Gemäß einem Ausführungsbeispiel können die Behälterbehandlungseinheiten Fülleinheiten zum Befüllen der Behälter mit einem flüssigen Füllprodukt oder Verschließeinheiten zum Verschließen der Behälter mit einem Verschluss, insbesondere einem Schraubverschluss, sein. Alternativ können die Behälterbehandlungseinheiten beispielsweise Sterilisationseinheiten, Umformeinheiten, Verpackungseinheiten, Reinigungseinheiten und/oder Etikettiereinheiten sein und/oder dazu ausgebildet sein, weitere sonstige Behandlungen durchzuführen.

Weitere Vorteile und Wirkungen sowie Weiterbildungen der Behälterbehandlungsmaschine ergeben sich aus den Vorteilen und Wirkungen sowie Weiterbildungen der oben beschriebenen Vorrichtung und des oben beschriebenen Transportsystems. Zur Vermeidung von Wiederholungen wird daher in dieser Hinsicht auf die vorangegangene Beschreibung verwiesen.

Im Folgenden wird die Erfindung anhand eines Ausführungsbeispiels mittels der beigefügten Zeichnungen beschrieben. Es zeigen:
- Figur 1: eine schematische Querschnittsdarstellung eines Transportsystems; und
- Figur 2: eine schematische Querschnittsdarstellung einer Behälterbehandlungsmaschine umfassend das Transportsystem.

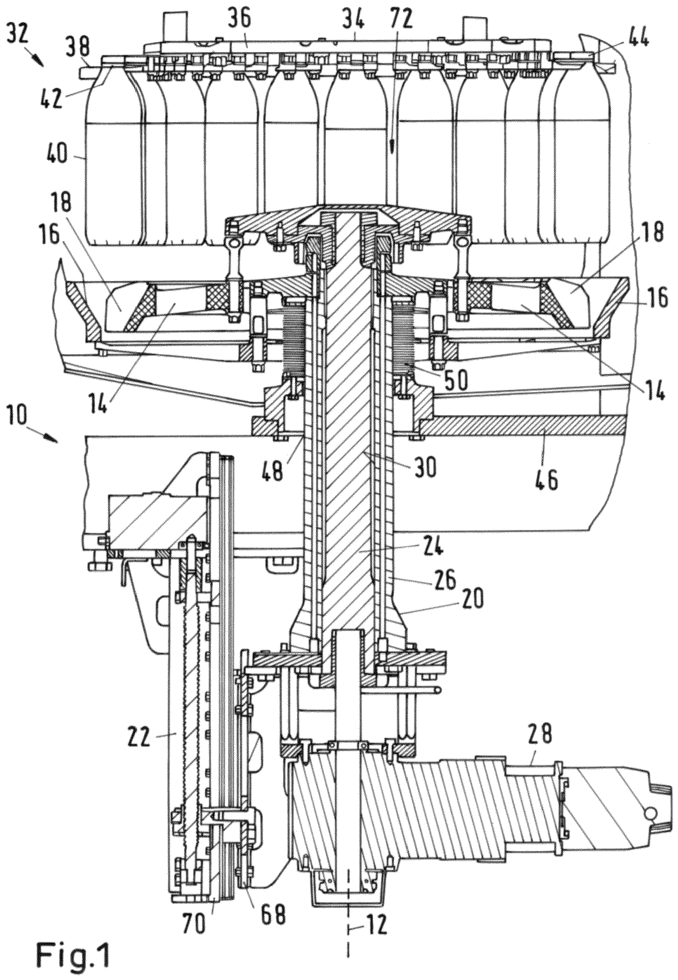

Ein Ausführungsbeispiel der erfindungsgemäßen Vorrichtung zum Führen von Behältern wird im Folgenden in ihrer Gesamtheit mit dem Bezugszeichen 10 bezeichnet, wie in Figur 1 dargestellt ist.

Die Vorrichtung 10 weist mindestens ein Führungsrad 14, mindestens eine Außenführung 16, mindestens eine Trägereinrichtung 20 und mindestens eine Verstelleinheit 22 auf.

Das Führungsrad 14 umfasst eine Vielzahl von Behälterbodenaufnahmen 18, in denen Bodenbereiche von zu führenden Behältern 40 zumindest teilweise aufgenommen werden können. Weiter ist das Führungsrad 14 um eine Drehachse 12 drehbar gelagert. Der gesamte Umfang des Führungsrads 14 erstreckt sich um die Drehachse 12. Die Behälterbodenaufnahmen 18 sind in diesem Beispiel äquidistant über den gesamten Umfang des Führungsrads 14 angeordnet.

Um das Führungsrad 14 ist die Außenführung 16 angeordnet, mit der die Behälterböden der Behälter 40 bei einer Drehung des Führungsrads 14 um die Drehachse 12 geführt werden. Die Außenführung 16 ist feststehend angeordnet, wobei sie sich nicht um die Drehachse 12 dreht. Das Führungsrad 14 kann damit als rotierender Teil der Vorrichtung 10 und die Außenführung 16 als statischer bzw. nicht rotierender Teil der Vorrichtung 10 angesehen werden.

Bei Formatwechseln, d. h., wenn die Maße der Behälter 40, die von der Vorrichtung 10 geführt werden sollen, geändert werden, kann es erforderlich sein, die Höhe des Führungsrads 14 und der Außenführung 16 zu verstellen. Dazu sind das Führungsrad 14 und die Außenführung 16 über die Trägereinrichtung 20 mit der Verstelleinheit 22 verbunden. Die Trägereinrichtung 20 weist dabei ein drehbar gelagertes Trägerelement 24 und ein feststehend gelagertes Trägerelement 26 auf.

Das drehbar gelagerte Trägerelement 24 ist drehfest mit dem Führungsrad 14 verbunden. Eine Drehung des drehbar gelagerten Trägerelements 24 bewirkt eine Drehung des Führungsrads 14 um die Drehachse 12. Das Führungsrad 14 ist auf dem drehbar gelagerten Trägerelement 24 gelagert.

Eine erste Antriebseinheit 26 kann beispielsweise unterhalb der Trägereinrichtung 20 angeordnet sein und zum Drehen des drehbar gelagerten Trägerelements 24 und damit des Führungsrads 14 ausgebildet sein. Das drehbar gelagerte Trägerelement 24 erstreckt sich von der Verstelleinheit 22 zum Führungsrad 14.

Das feststehend gelagerte Trägerelement 26 ist fest mit der Außenführung 16 verbunden. Die Außenführung 16 ist daher auf dem feststehend gelagerten Trägerelement 26 gelagert. Das feststehend gelagerte Trägerelement 26 erstreckt sich von der Verstelleinheit 22 zur Außenführung 16.

Das feststehend gelagerte Trägerelement 26 und das drehbar gelagerte Trägerelement 24 sind koaxial zueinander ausgerichtet. Sie erstrecken sich entlang der Drehachse 12. Das feststehend gelagerte Trägerelement 26 kann eine Durchgangsöffnung 30 aufweisen, die sich ebenfalls entlang der Drehachse 12 erstreckt. Das drehbar gelagerte Trägerelement 24 kann sich durch die Durchgangsöffnung 30 durch das feststehend gelagerte Trägerelement 26 erstrecken und drehbar an dem feststehend gelagerten Trägerelement 26 gelagert sein.

Die Verstelleinheit 22 ist dazu ausgebildet, die Trägereinrichtung 20 in ihrer Höhe zu verstellen. Damit werden auch die Außenführung 16 und das Führungsrad 14 durch die Verstelleinheit in ihrer Höhe verstellt. Im dargestellten Ausführungsbeispiel kann die Verstelleinheit 22 die Trägereinrichtung 20 in ihrer Gesamtheit in der Höhe verstellen, d. h. gleichzeitig sowohl das drehbar gelagerte Trägerelement 24 als auch das feststehend gelagerte Trägerelement 26.

Gleichzeitig kann die Verstelleinheit 22 auch die erste Antriebseinheit 28 in der Höhe verstellen, sodass zum Beispiel auf eine Gleitkopplung zwischen der ersten Antriebseinheit 28 und den drehbar gelagerten Trägerelement 24 verzichtet werden kann.

In diesem Beispiel ist die Verstelleinheit 22 als Linearantrieb ausgebildet, an den ein Schlitten 68 entlang einer Schiene 70 geführt werden kann. Der Schlitten 68 kann lediglich entlang der Schiene 70 bewegt werden. Die Schiene 70 ist vertikal ausgerichtet, um den Schlitten 68 vertikal bewegen zu können. An dem Schlitten 68 ist die Trägereinrichtung 20 bzw. eines der beiden Trägerelemente 24, 26 befestigt. Der Schlitten 68 kann zum Beispiel mittels einer Gewindespindel oder einem Kettenantrieb angetrieben werden.

Es ist jedoch auch denkbar, dass der Schlitten 68 oder die Trägereinrichtung 20 eine vertikal geführte Zahnstange aufweisen können, wobei die Zahnstange durch ein Zahnrad linear angetrieben werden kann.

Weiter ist die Verstelleinheit 22 in diesem Beispiel unterhalb des Führungsrads 14 angeordnet.

Die Vorrichtung 10 kann Teil eines Transportsystems 32 sein. Das Transportsystem 32 weist zusätzlich zu der Vorrichtung 10 eine Haltevorrichtung 34 für Behälter 40 auf.

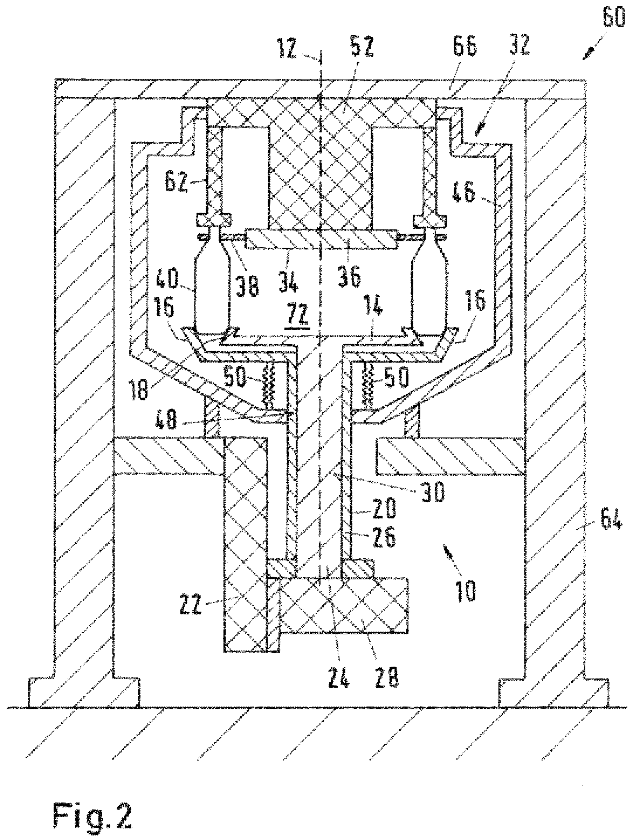

Die Haltevorrichtung 34 weist ein Transportrad 36 auf, das um die Drehachse 12 drehbar gelagert ist. Dabei ist die Drehachse 12 lediglich eine gedachte Drehachse und keine gemeinsame physische Drehachse für die Haltevorrichtung 34 und die Vorrichtung 10. Zwischen der Haltevorrichtung 34 und der Vorrichtung 10 kann im Bereich der Drehachse 12 ein Freiraum 72 angeordnet sein. D. h., dass die Lagerung der Haltevorrichtung 34 in radialer Richtung von der Drehachse 12 ausgesehen oberhalb und/oder seitlich außerhalb der Drehachse 12 angeordnet sein kann. Dies ist beispielsweise in Figur 2 dargestellt, bei der die Haltevorrichtung 34 durch die Lagerelemente 64 auf dem Boden gelagert ist.

Alternativ oder zusätzlich kann die Haltevorrichtung 34 auch mittels eines Lagerelements 66 an einer Decke einer Maschinenhalle gelagert sein.

Weiter weist die Haltevorrichtung 34 eine Vielzahl von Halteelementen 38 auf, die an dem Transportrad 36 angeordnet sind. Die Halteelemente 38 sind zum Halten von Behältern 40 an einem Haltekragen 42 der Behälter 40 ausgebildet.

Die Halteelemente 38 können zum Beispiel als Greifer bzw. Zangen oder als Taschen unmittelbar an dem Umfang des Transportrads 36 ausgebildet sein.

Das Transportrad 36 kann durch eine zweite Antriebseinheit 52 angetrieben werden, um eine Drehung um die Drehachse 12 durchzuführen. Die zweite Antriebseinheit 52 ist in diesem Beispiel oberhalb des Transportrads 36 angeordnet.

Das Transportsystem 32 kann weiter ein Gehäuse 46 aufweisen, das den Freiraum 72 umschließen kann. Weiter erstreckt sich das Gehäuse 46 um das Transportrad 36, das Führungsrad 14 und die Außenführung 16. Das feststehend gelagerte Trägerelement 26 und das drehbar gelagerte Trägerelement 24 können sich durch eine Durchgangsöffnung 48 des Gehäuses 46 in das Gehäuse 46 hinein erstrecken.

An der Durchgangsöffnung 48 kann ein Dichtelement 50 angeordnet sein, das die Durchgangsöffnung 48 abdichtet. Dabei kann eine Abdichtung zwischen der Trägereinrichtung 20 und dem Gehäuse 46 erfolgen. Das Dichtelement 50 kann beispielsweise ein Faltenbalg sein, der sich beispielsweise um die Bereiche der Trägerelemente 24, 26 erstrecken kann, die innerhalb des Gehäuses 46 angeordnet sind. Alternativ kann der Faltenbalg bzw. das Dichtelement 50 auch außerhalb des Gehäuses 46 angeordnet sein.

Am Beispiel des Faltenbalgs, kann ein Ende des Faltenbalgs an dem Gehäuse befestigt sein und das andere Ende an der Trägereinrichtung 20. In dem vorliegenden Beispiel gemäß Figur 2 kann der Faltenbalg an dem feststehend gelagerten Trägerelement 26 befestigt sein. Bei der Hubbewegung kann der Faltenbalg gestreckt und gestaucht werden, ohne eine Beeinträchtigung der Dichtwirkung.

Es versteht sich von selbst, dass das Dichtelement 50 auch als ein Rollbalg ausgebildet sein kann oder anders ausgestaltet werden kann.

In Figur 2 ist das Transportsystem 32 als Teil einer Behälterbehandlungsmaschine 60 dargestellt. Die Behälterbehandlungsmaschine 60 kann eine Vielzahl von Behälterbehandlungseinheiten 62 aufweisen, die zum Behandeln von Behältern 40 ausgebildet sind. Die Behälterbehandlungseinheiten 62 sind oberhalb des Führungsrads 14 angeordnet. Dabei ist jeweils eine Behälterbehandlungseinheit 62 über einer Behälteraufnahme 18 des Führungsrads 14 angeordnet.

Ein Behälter 40, der in einer Behälteraufnahme 18 angeordnet ist, kann durch die darüber angeordnete Behälterbehandlungseinheit 62 behandelt werden.

Die Behälterbehandlungseinheiten 62 können beispielsweise Fülleinheiten sein, mit denen die Behälter 40, beispielsweise mit einem flüssigen Füllgut, befüllt werden können. In einem anderen Beispiel können die Behälterbehandlungseinheiten 62 Verschließeinheiten sein, mit denen die Behälter 40 verschlossen werden können. Dabei kann ein Verschluss 44 auf den Behälter 40 angebracht werden. Der Verschluss 44 kann insbesondere ein Schraubverschluss sein.

Die Behälterbehandlungseinheiten 62 können ebenfalls um die Drehachse 12 drehbar gelagert sein. Dabei können sie sich synchron mit den Behälterbodenaufnahmen 18 bewegen. Weiter können sie die gleiche Teilung wie die Behälterbodenaufnahmen 18 und die Halteelemente 38 aufweisen.

Das oben beschriebene Beispiel dient in keiner Weise einer Beschränkung der Erfindung. Vielmehr kann die Erfindung in vielfältiger Weise abgewandelt werden. Alle oben beschriebenen Merkmale der Erfindung können allein oder in Kombination miteinander wesentlich für die Erfindung sein.

### Bezugszeichenliste

- 10: Vorrichtung zum Führen von Behältern
- 12: Drehachse
- 14: Führungsrad
- 16: Außenführung
- 18: Behälterbodenaufnahme
- 20: Trägereinrichtung
- 22: Verstelleinheit
- 24: drehbar gelagertes Trägerelement
- 26: feststehend gelagertes Trägerelement
- 28: Antriebseinheit
- 30: Durchgangsöffnung
- 32: Transportsystem
- 34: Haltevorrichtung
- 36: Transportrad
- 38: Halteelement
- 40: Behälter
- 42: Haltekragen
- 44: Verschluss
- 46: Gehäuse
- 48: Durchgangsöffnung
- 50: Dichtelement
- 52: Antriebseinheit
- 60: Behälterbehandlungsmaschine
- 62: Behälterbehandlungseinheit
- 64: Lagerelement
- 66: Lagerelement
- 68: Schlitten
- 70: Schiene
- 72: Freiraum

## Patentansprüche

1. Vorrichtung (10) zum Führen von Behältern (40), umfassend mindestens ein um eine Drehachse (12) drehbar gelagertes Führungsrad (14), das eine Vielzahl von Behälterbodenaufnahmen (18) aufweist, mindestens eine feststehend um das Führungsrad (14) gelagerte Außenführung (16) für die Behälter (40), mindestens eine Trägereinrichtung (20) und mindestens eine Verstelleinheit (22) für die Trägereinrichtung (20), **dadurch gekennzeichnet, dass** die Trägereinrichtung (20) mindestens ein um die Drehachse (12) drehbar gelagertes Trägerelement (24), an dem das Führungsrad (14) drehfest befestigt ist, und mindestens ein feststehend gelagertes Trägerelement (26), an dem die Außenführung (16) befestigt ist, aufweist, wobei die Verstelleinheit (22) zur Höhenverstellung der Trägereinrichtung (20) ausgebildet ist.

2. Vorrichtung (10) nach Anspruch 1, **dadurch gekennzeichnet, dass** das feststehend gelagerte Trägerelement (26) und das drehbar gelagerte Trägerelement (24) koaxial oder im Wesentlichen koaxial zur Drehachse (12) angeordnet sind.

3. Vorrichtung (10) nach Anspruch 1 oder 2, **dadurch gekennzeichnet, dass** die Vorrichtung (10) weiter mindestens eine erste Antriebseinheit (28) für das drehbar gelagerte Trägerelement (24) aufweist, die zum Drehen des drehbar gelagerten Trägerelements (24) um die Drehachse (12) ausgebildet ist.

4. Vorrichtung (10) nach Anspruch 3, **dadurch gekennzeichnet, dass** die erste Antriebseinheit (28) an der Trägereinrichtung (20) befestigt ist, vorzugsweise unterhalb des drehbar gelagerten Trägerelements (24).

5. Vorrichtung (10) nach einem der vorangegangenen Ansprüche, **dadurch gekennzeichnet, dass** Verstelleinheit (22) zum Verstellen der Höhe beider Trägerelemente (24, 26) gleichzeitig ausgebildet ist.

6. Vorrichtung (10) nach einem der vorangegangenen Ansprüche, **dadurch gekennzeichnet, dass** die Verstelleinheit (22) unterhalb des Führungsrads (14) angeordnet ist, wobei das drehbar gelagerte Trägerelement (24) sich von der Verstelleinheit (22) zu dem Führungsrad (14) erstreckt und/oder das feststehend gelagerte Trägerelement (26) sich von der Verstelleinheit (22) zu der Au-βenführung (16) erstreckt.

7. Vorrichtung (10) nach einem der vorangegangenen Ansprüche, **dadurch gekennzeichnet, dass** das feststehend gelagerte Trägerelement (26) eine sich entlang der Drehachse (12) erstreckende Durchgangsöffnung (30) für das drehbar gelagerte Trägerelement (24) aufweist.

8. Transportsystem (32) für Behälter (40), umfassend eine Haltevorrichtung (34) für Behälter (40) und mindestens eine Vorrichtung (10) nach einem der vorangegangenen Ansprüche, wobei die Haltevorrichtung (34) ein um die Drehachse (12) der Vorrichtung (10) drehbar gelagertes Transportrad (36) mit einer Vielzahl von Halteelementen (38) zum Halten von Behältern (40) an einem Haltekragen (42) der Behälter (40) aufweist und die Vorrichtung (10) unterhalb des Transportrads (36) angeordnet ist.

9. Transportsystem (32) nach Anspruch 8, **dadurch gekennzeichnet, dass** das Transportsystem (32) weiter ein Gehäuse (46) aufweist, das sich zumindest um das Transportrad (36), das Führungsrad (14) und die Außenführung (16) erstreckt, wobei das Gehäuse (46) eine Durchgangsöffnung (48) aufweist, durch die sich das feststehend gelagerte Trägerelement (26) und das drehbar gelagerte Trägerelement (24) in das Gehäuse (46) hinein erstrecken.

10. Transportsystem (32) nach Anspruch 9, **dadurch gekennzeichnet, dass** ein Dichtelement (50) die Durchgangsöffnung (48) des Gehäuses (46) abdichtet, vorzugsweise ein Faltenbalg, der sich um das drehbar gelagerte Trägerelement (24) und/oder das feststehend gelagerte Trägerelement (26) erstreckt und sowohl an dem Gehäuse (46) als auch an dem drehbar gelagerten Trägerelement (24) und/oder dem feststehend gelagerten Trägerelement (26) befestigt ist.

11. Transportsystem (32) nach einem der Ansprüche 8 bis 10, **dadurch gekennzeichnet, dass** die Haltevorrichtung (34) oberhalb und/oder seitlich außerhalb der Drehachse (12), vorzugsweise mit einer eigenen Lagerung, gelagert ist.

12. Transportsystem (32) nach einem der Ansprüche 8 bis 11, **dadurch gekennzeichnet, dass** das Transportsystem (32) ferner eine zweite Antriebseinheit (52) zum Drehen des Transportrads (36) aufweist, die vorzugsweise zusätzlich zum Antreiben eines drehbar gelagerten Rads mit einer Vielzahl von Behälterbehandlungseinheiten ausgebildet ist.

13. Behälterbehandlungsmaschine (60) umfassend mindestens eine Vorrichtung (10) nach einem der Ansprüche 1 bis 7 und/oder mindestens ein Transportsystem (32) nach einem der Ansprüche 8 bis 12, wobei die Behälterbehandlungsmaschine (60) eine Vielzahl von Behälterbehandlungseinheiten (62) aufweist, die oberhalb des Führungsrads (14) angeordnet sind und zum Behandeln von Behältern (40) ausgebildet ist, die von dem Führungsrad (14) geführt werden.

14. Behälterbehandlungsmaschine (60) nach Anspruch 13, **dadurch gekennzeichnet, dass** die Behälterbehandlungseinheiten (62) Fülleinheiten zum Befüllen der Behälter (40) mit einem flüssigen Füllprodukt oder Verschließeinheiten zum Verschließen der Behälter (40) mit einem Verschluss (44), insbesondere einem Schraubverschluss, sind.
